# EUROPEAN PATENT SPECIFICATION

(11) **EP 2 582 270 B1**
(45) Date of publication and mention of the grant of the patent: **16.07.2014**
(21) Application number: 11727676.6
(22) Date of filing: 15.06.2011
(51) Int. Cl.: A47J 31/40

(54) **BEVERAGE DISPENSER WITH IMPROVED POWDER DOSING SYSTEM**
GETRÄNKESPENDER MIT VERBESSERTEM PULVERDOSIERSYSTEM
DISTRIBUTEUR DE BOISSON ÉQUIPÉ D'UN SYSTÈME DE DOSAGE DE POUDRE AMÉLIORÉ

(30) Priority: 16.06.2010 EP 10166115
(43) Date of publication of application: 24.04.2013
(73) Proprietor: Nestec S.A., 1800 Vevey (CH)
(72) Inventor: NELISSEN, Radboud, CH-1004 Lausanne (CH); MURPHY, Richard Luke, Chagrin Falls Ohio 44070 (US); GONZALEZ, Juan J., CH-1806 St-Légier (CH); BARDIN, Ennio, CH-1350 Orbe (CH)
(74) Representative: Ducreux, Marie
(86) International application number: PCT/EP2011/059957
(87) International publication number: WO 2011/157759

(56) References cited:
- EP-A1- 2 123 201
- WO-A1-2011/157759
- US-A- 3 550 814

## Description

The present invention relates to device for metering and discharging accurately measured amounts of powder materials from a container storing the powder material, particularly for the preparation of beverages by dilution of metered doses of food soluble ingredients.

Various automated beverages or food dispensers for making hot or cold reconstituted products are known in the art. In a conventional beverage or food dispenser, a metered amount of water-soluble beverage-forming or food-forming powder supplied from a container, and a complementary metered amount of hot or cold water supplied from a water source are mixed and/or whipped to produce a hot, ambient or cold beverage or food, which is dispensed into a cup or glass. The powder can be stored in a canister that is a part of the dispenser and in which the operator regularly fills powder or the powder can be stored in a disposable cartridge that is regularly connected to the dispenser and then thrown away when they are emptied.

EP 2 123 201 describes such a beverage dispenser where soluble powder is drawn from suitable cartridges connected to the dispenser. Due to the simultaneous connection of different cartridges to the dispenser different beverages can be prepared according to the choice of the customer. For example the customer can select the preparation of a coffee or a decaffeinated coffee. In order to avoid an interruption in dispensing of beverages, due to shortage of powder, the beverage dispenser usually comprises a feeder hopper which receives a part of the powder from the cartridge and provides the metering means with this powder. Consequently, when the cartridge is emptied the hopper feeder still contains powder and beverages can be reproduced while a new cartridge can be installed.

Yet it has been observed that in such a beverage dispenser, the powder stored in the feeder hopper is not accurately dosed by the metering means. Actually the weight of the powder dose metered by the dosing means decreases with reducing powder levels within the cartridge. This trends progresses until the cartridge is emptied and the powder from the feeder hopper is released into the dosing means - at which point an increase in dose weight occurs.

The consistency of powder dosing is an important issue in the beverage dispensers because it influences the taste of the reconstituted beverage or food which becomes more diluted or concentrated. If the dispensing unit is set to dispense the target powder dose when the container is full, the concentration of the beverage or food will decrease as the level of the canister is emptied. If the powder dosing is set (time or speed) to dispense the target powder dose when the container is halfway or close to empty, then when the canister is refilled or reloaded the concentration of the beverage or food will be higher, yielding a more concentrated beverage or food. In terms of product quality, the consistency of the product is important for meeting the satisfaction of the consumer. If the dose-to-dose variation is too large, e.g., on the order of 5 % of powder discrepancy or more, it affects the in-cup quality and the organoleptic properties of the product in a way that becomes perceptible for the consumer.

One aim of the present invention is to solve these problems by proposing a dispensing machine for producing beverages from a food or beverage ingredient powder comprising powder storing means and powder dosing means providing accurate doses of powder whatever the level of powder in the storing means.

According to a first aspect, the invention concerns a dispensing machine as defined in claim 1.

The storing and dosing sub-assembly of the dispensing machine is conceived for being connected to a food or beverage ingredient powder container. The dispensing machine of the present invention can comprise more than one powder storing and dosing sub-assembly. In that latter case, the different sub-assemblies can be connected to containers containing different types of powders. Preferably each powder storing and dosing sub-assembly presents the same configuration.

The buffer tank of the sub-assembly can present at its upper end connection means to connect a powder container. These connection means can be selected in the list of threaded means, snap means, sliding means. The connection can also be simply established by an engagement of the container outlet in the buffer tank opening.

The buffer tank simultaneously stores powder and guides powder from the container to the dosing device. The dosing device is usually placed at the bottom of the buffer tank so that powder flows from the container to the dosing device by gravity.

The first portion of the buffer tank tube presents a length greater than two times its section larger dimension. Usually this first portion of the buffer tank tube presents a cylindrical section and then its length is preferably greater than two times its diameter.

According to a specific embodiment the upper end of the buffer tank tube is vertically out of line with the bottom end of the buffer tank emerging on the dosing device. This embodiment can be implemented due to design constraints of the dispensing machine, particularly if the machine comprises at least two powder storing and dosing sub-assemblies.

The second portion of the buffer tank tube that connects the first portion of the tube to the powder container preferably presents a straight design. Generally, the second portion of the tube opens out from its bottom end to its upper end. Preferably, the inferior side of the second portion of the tube presents an angle α with the vertical of at most 40°, preferably at most 35°.

According to a preferred embodiment at least a part of the buffer tank tube can be made of stainless steel.

According to a specific embodiment at least a part of the buffer tank tube can be made of a transparent material. In this embodiment the dispensing machine preferably comprises an optical sensor at the level of the buffer tank.

In a second aspect the present invention also concerns a method to retrofit a beverage dispensing machine of the prior art by replacing the existing buffer tank by a buffer tank such as defined above consisting in a tube for guiding the powder from the container to the dosing device, the first portion of said tube that emerges on the dosing device being vertical.

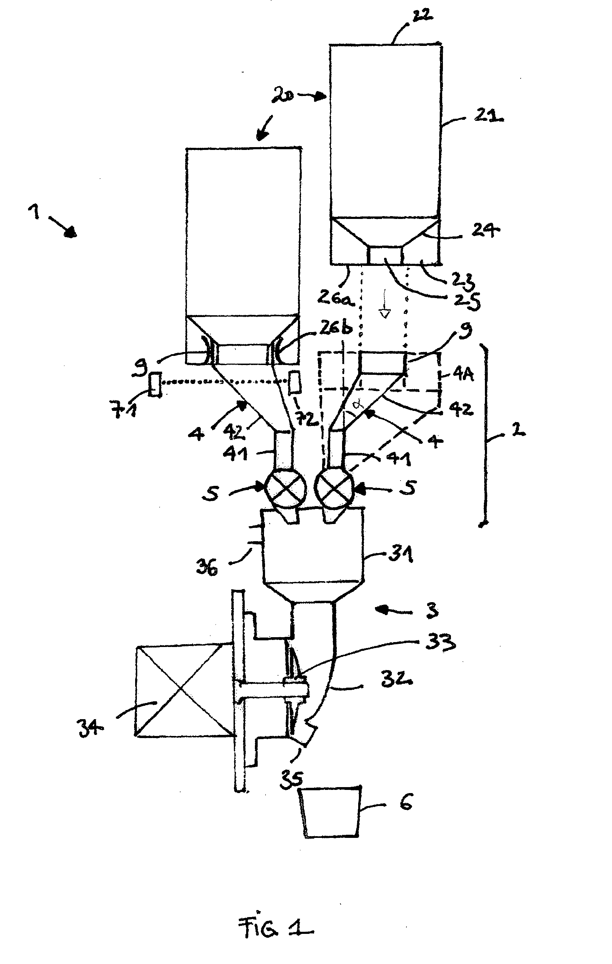

In the present specification, the terms "upper" and "bottom" and equivalents are used to describe the relational positioning of features of the invention. Thee both terms should be understood to refer to the buffer tank tube in its normal orientation into a dispensing machine for producing beverages as shown for example in FIG.1.

### Brief description of the drawings

The characteristics and advantages of the invention will be better understood in relation to FIG. 1 which is a schematic view of a dispenser of the present invention.

### Detailed description of the drawings

With reference to FIG. 1 the beverage dispenser 1 comprises two powder storing and dosing sub-assemblies 2 able to provide powder doses to common reconstitution means 3. Each of the powder storing and dosing sub-assemblies 2 comprises a buffer tank 4 able to be connected to a powder container 20.

The container 20 is usually a disposable cartridge that contains a soluble powder like for example coffee, decaffeinated coffee, dehydrated culinary products, chocolate or milk. Preferably the two containers 20 contain different powders. More preferably one contains coffee whereas the other contains decaffeinated coffee. The container comprises multiple doses of powder. The disposable container can be a container such as described in WO 2009/000810 and comprising a vessel 21 presenting a closed end 22 and an opened end 23, a hopper 24 placed inside the vessel and tapering to a discharge outlet 25 in direction of the vessel opened end, a tearable membrane 26a closing the hopper and the vessel. This type of container enables the refilling of the dispenser without loss of powder outside the buffer tank, because the tearable membrane is torn (illustrated as 26b in FIG.1) while the container is being connected to the dispenser. Then the powder flows through the container hopper 24 directly in the buffer tank 4.

The dispenser comprises two dosing devices 5. In the illustrated embodiment, each of the dosing devices consists in a barrel closely integrated in a cylindrical chamber. The end of the drive shaft of the barrel can present coupling means able to be coupled to a drive motor in the base station. Each of the dosing devices is placed at the bottom of the buffer tanks 4 to receive the powder therefrom by gravity. The connection between a buffer tank and its corresponding dosing device should be such that the dosing device can be freely operated without being slowed down by e.g. friction means.

The upper end of each of the buffer tanks 4 of the beverage dispenser 1 is connected to the food or beverage ingredient powder container 20 so that the powder is able to flow from the container 20 to the buffer tank 4. The upper end of the buffer tank 4 can present connection means 9 to establish a connection with the container 20. If the disposable containers are containers such as described in WO 2009/000810, the connection means 9 can simply consist in a tube presenting a section smaller than the section of the opened end of the container vessel and bigger than the section of the hopper discharge outlet. Other connection means can be used depending on the type of container 20 that is used. The connection means can be a thread matching with a corresponding thread of the container 20 or a perforator for opening the container 20. the dispenser can also comprise fixing means (not represented) to lock the container 20.

The buffer tank 4 is a tube composed a first portion 41 emerging above the dosing device. This first portion is vertical and extends along a length that is at least greater than twice the diameter of the tube. The second portion 42 of the buffer tank is a tube linking the first vertical portion 41 to the powder container opening 25. The tube of this second portion opens out in direction of the powder container to match with its opening 25. Preferably the inferior side of the second portion of the tube 42 presents an angle α with the vertical of at most 35°.

On the contrary in the prior art illustrated in dotted lines, the buffer tank 4A was simply a hopper opening out from the dosing device 5 to the connection means 9.

The other parts of the dispensers - in particular the reconstitution means 3 for preparing a beverage from a dose of the food or beverage ingredient powder - are common to existing prior art. In FIG.1 they encompass a mixing chamber 31 in which the dose of powder issued from a dosing device 5 is mixed with a diluent, usually water, introduced from a diluent inlet 36. The mixture is then introduced in a whipping chamber 32 comprising a whipper 33 before leaving the dispenser through an outlet 35 delivering the beverage in a cup 6. Other known reconstitution means can be implemented in relationship with the storing and metering subassembly of the present invention.

Optionally the dispenser can comprise sensor means 71, 72 able to detect the level of powder present in the buffer tank 4. The sensor is preferably an optical sensor comprising a transmitter and a receiver or a transmitter and a reflecting means. In this option, it is preferable that at least the part of the buffer tank 4 is transparent so that it can be crossed by the optical ray.

The beverage dispensing machine according to FIG.1 was used to prepare coffee beverages. The coffee powder doses metered by the dosing devices were recovered before being mixed with the diluent so as to weight them and analyse the dosing accuracy of the storing and dosing sub-assemblies. The tests showed that 88 % of doses metered by the dosing devices presented a dose-to-dose variation less than 5 % of the average metered dose.

The same experiment made with the same coffee powder in a beverage dispensing machine according to FIG.1 but with the buffer tank illustrated in dotted line showed that only 70 % of the coffee powder doses metered by the dosing devices presented a dose-to-dose variation less than 5 % with the average metered dose.

## Claims

1. A dispensing machine (1) for producing beverages from a beverage ingredient powder comprising :
- at least one powder storing and dosing sub-assemblies (2), each of them comprising :
. a buffer tank (4) able to be connected to a food or beverage ingredient powder container (20),
. a dosing device (5) for metering a dose of a beverage ingredient powder,
- reconstitution means (3) for preparing a beverage from a dose of the food or beverage ingredient powder,
wherein each of the buffer tank (4) comprises a tube (41) for guiding the powder from the container connection means to the dosing device, the first portion (41) of said tube emerging on the dosing device (5) being vertical, and
wherein the first portion (41) of the tube presents a length greater than two times its section larger dimension.

2. A dispensing machine according to Claim 1, wherein the upper end of the buffer tank tube is vertically out of line with the bottom end of the buffer tank (4) emerging on the dosing device (5).

3. A dispensing machine according to any one of the precedent claims, wherein the second portion (42) of the buffer tank tube presents a straight design.

4. A dispensing machine according to any one of the precedent claims, wherein the second portion (42) of the tube opens out from its bottom end to its upper end.

5. A dispensing machine according to any one of the precedent claims, wherein the inferior side of the second portion (42) of the tube presents an angle α with the vertical of at most 40 °.

6. A dispensing machine according to any one of the precedent claims, wherein at least a part of the tube (41, 42) is made of stainless steel.

7. A dispensing machine according to any one of the claims 1 to 5, wherein at least a part of the tube (41, 42) is made of transparent material.

8. A dispensing machine according to the any one of the precedent claims, wherein the dosing device (5) consists in a barrel closely integrated in a cylindrical chamber.

## Patentansprüche

1. Ausgabegerät (1) zur Herstellung eines Getränks aus einem Getränkezutatenpulver, aufweisend:
- zumindest eine Pulveraufbewahrungs- und Dosier-Teilbaugruppe (2), von denen jede aufweist:
. einen Pufferspeicher (4) zur Verbindung mit einem Nahrungsmittel- oder Getränkezutatenpulver-Behälter (20),
. eine Dosiereinheit (5) zum Abmessen einer Portion eines Getränkezutatenpulvers,
- Herstellungsmittel (3) zur Zubereitung eines Getränks aus einer Portion eines Nahrungsmittels oder eines Getränkezutatenpulvers,
wobei jeder der Pufferspeicher (4) ein Rohr (41) zur Überführung des Pulvers von den Behälterverbindungsmitteln zur Dosierungseinheit aufweist, wobei der erste Abschnitt (41) dieses Rohrs , welcher aus der Dosiereinheit herauskommt, vertikal ist, und
wobei der erste Abschnitt (41) des Rohres länger ist als das Doppelte seines größten Durchmessers.

2. Ausgabegerät nach Anspruch 1, wobei das obere Ende des Pufferspeicherrohrs vertikal außerhalb der Mittellinie des unteren Endes des Pufferspeichers (4) steht, welches aus der Dosierungseinheit (5) herauskommt.

3. Ausgabegerät nach einem der vorangegangenen Ansprüche, wobei der zweite Abschnitt (42) des Pufferspeicherrohrs ein geradliniges Design aufweist.

4. Ausgabegerät nach einem der vorangegangenen Ansprüche, wobei der zweite Abschnitt (42) des Rohrs sich von seinem unteren zu seinem oberen Ende öffnet.

5. Ausgabegerät nach einem der vorangegangenen Ansprüche, wobei der untenstehende Teil des zweiten Abschnitts (42) des Rohres einen Winkel α von maximal 40° zu der Vertikalen bildet.

6. Ausgabegerät nach einem der vorangegangenen Ansprüche, wobei zumindest ein Teil des Rohrs (41,42) aus rostfreiem Stahl hergestellt ist.

7. Ausgabegerät nach einem der Ansprüche 1 bis 5, wobei zumindest ein Teil des Rohrs (41,42) aus einem transparenten Material hergestellt.

8. Ausgabegerät nach einem der vorangegangenen Ansprüche, wobei die Dosierungseinheit (5) aus einem Zylinder besteht, welcher eng in eine zylindrische Kammer integriert ist.

## Revendications

1. Machine de distribution (1) pour la production de boissons à partir d'une poudre d'ingrédient de boisson comprenant:
- au moins un sous-ensemble de stockage de poudre et de dosage (2), chacun d'entre eux comprenant:
. un réservoir tampon (4) apte à être raccordé à un récipient (20) de poudre d'ingrédient de boisson ou d'aliment,
. un dispositif de dosage (5) destiné à mesurer une dose d'une poudre d'ingrédient de boisson,
- des moyens de reconstitution (3) destinés à préparer une boisson à partir d'une dose de la poudre d'ingrédient de boisson ou d'aliment,
dans laquelle chaque réservoir tampon (4) comprend un tube (41) destiné à guider la poudre depuis les moyens de raccordement de récipient jusqu'au dispositif de dosage, la première partie (41) dudit tube débouchant sur le dispositif de dosage (5) étant verticale, et
dans laquelle la première partie (41) du tube présente une longueur supérieure à deux fois la plus grande dimension de sa section.

2. Machine de distribution selon la revendication 1, dans laquelle l'extrémité supérieure du tube du réservoir tampon est décalée verticalement par rapport à l'extrémité inférieure du réservoir tampon (4) débouchant sur le dispositif de dosage (5).

3. Machine de distribution selon l'une quelconque des revendications précédentes, dans laquelle la deuxième partie (42) du tube du réservoir tampon présente une forme droite.

4. Machine de distribution selon l'une quelconque des revendications précédentes, dans laquelle la deuxième partie (42) du tube s'élargit depuis son extrémité inférieure jusqu'à son extrémité supérieure.

5. Machine de distribution selon l'une quelconque des revendications précédentes, dans laquelle le côté inférieur de la deuxième partie (42) du tube présente un angle α avec la verticale d'au plus 40°.

6. Machine de distribution selon l'une quelconque des revendications précédentes, dans laquelle au moins une partie du tube (41, 42) est réalisée en acier inoxydable.

7. Machine de distribution selon l'une quelconque des revendications 1 à 5, dans laquelle au moins une partie du tube (41, 42) est réalisée en matériau transparent.

8. Machine de distribution selon l'une quelconque des revendications précédentes, dans laquelle le dispositif de dosage (5) consiste en un corps étroitement intégré dans une chambre cylindrique.
